# EUROPÄISCHE PATENTSCHRIFT

(11) **EP 3 881 414 B1**
(45) Veröffentlichungstag und Bekanntmachung des Hinweises auf die Patenterteilung: **26.03.2025**
(21) Anmeldenummer: 19801305.4
(22) Anmeldetag: 07.11.2019
(51) Int. Cl.: H02K 5/20, F04D 13/06, F04D 29/58, H02K 9/19, H02K 11/33

(54) **ELEKTROMOTOR**
ELECTRIC MOTOR
MOTEUR ÉLECTRIQUE

(30) Priorität: 12.11.2018 DE 102018219253
(43) Veröffentlichungstag der Anmeldung: 22.09.2021
(73) Patentinhaber: KSB SE & Co. KGaA, 67227 Frankenthal (DE)
(72) Erfinder: JANJIC, Boris, 67227 Frankental (DE)
(74) Vertreter: von Tietzen und Hennig, Nikolaus
(86) Internationale Anmeldenummer: PCT/EP2019/080576
(87) Internationale Veröffentlichungsnummer: WO 2020/099239

(56) Entgegenhaltungen:
- EP-A1- 2 498 386
- EP-A2- 0 819 852
- DE-A1- 3 642 729
- DE-C1- 3 738 592
- GB-A- 2 401 487

## Beschreibung

Die Erfindung betrifft einen Elektromotor in Verbindung mit einer Pumpe und einem Elektronikbauteil.

In einem Elektromotor und der zugeordneten Leistungselektronik werden im laufenden Betrieb je nach Belastung mehr oder weniger Verluste erzeugt und dadurch wird Wärme freigesetzt. Eine unzulässig hohe Erwärmung führt zur Schäden am Motor und an der Elektronik. Um die Leistungsdichte des Antriebs zu erhöhen, sucht der Konstrukteur eines geregelten Antriebes regelmäßig nach geeigneten Maßnahmen, die Wärme vom Antrieb abzuführen.

Die US 2005 0047 933 A1 zeigt eine Motorpumpe, bei der das Fördermedium durch ein mehrwandiges Pumpengehäuse geleitet wird.

Die WO 2015/195 411 A1 zeigt eine Anordnung der Leistungselektronik in einem Pumpengehäuse, die für eine Kühlung durch Fördermedium sorgen soll.

Die JP 2007 211 695 A zeigt die Kühlung eines Kühlkörpers, der die Wärme der Leistungselektronik aufnimmt und mit Fördermedium gekühlt wird.

Die GB 2 401 487 A zeigt eine elektrisch angetriebene Flüssigkeitspumpenanordnung. Die Anordnung umfasst eine Flüssigkeitspumpe und einen Elektromotor mit einer elektronischen Steuereinheit. Im Elektromotor ist ein Kühlkanal vorgesehen, durch den eine Flüssigkeit von einem Hochdruckbereich zu einem Niederdruckbereich der Pumpe gepumpt wird.

Aufgabe der Erfindung ist es, eine Kühlung für einen Elektromotor in Verbindung mit einer Leistungselektronik und einer Pumpe weiter zu entwickeln, der einfach und kostengünstig herstellbar ist.

Diese Aufgabe wird gelöst durch einen Elektromotor mit einer verbundenen Leistungselektronik und einer Pumpe, umfassend die Merkmale des Anspruch 1.

Erfindungsgemäß ist die Kühlung als Flüssigkeitskühlung ausgeführt, wobei die Kühlflüssigkeit durch das durch die Pumpe geförderte Förderfluid bereitgestellt ist. Dies hat den Vorteil, dass die Flüssigkeit als Kühlflüssigkeit mit einer hohen Wärmekapazität gegenüber der üblicherweise verwendeten Umgebungsluft, bei einer Kühlung durch einen Lüfter, wirkt.

Es ist ein Kühlmittelkanal zur Führung der Kühlflüssigkeit in oder an der Leistungselektronik vorgesehen. Dies hat den Vorteil, dass die Kühlflüssigkeit zu einzelnen Bauteilen hingeführt werden kann.

Die Kühlflüssigkeit verläuft vom druckseitigen Anschluss des Pumpengehäuses durch den Kühlmittelkanal zum saugseitigen Anschluss des Pumpengehäuses. Dies bewirkt, dass die Kühlflüssigkeit mit dem Druck, der durch die Pumpe aufgebaut wird in den Kühlmittelkanal eingebracht wird, während gleichzeitig mit dem Sog der Saugseite der Pumpe am anderen Ende des Kühlmittelkanals an der Kühlflüssigkeit gesaugt wird. Das erwärmte Förderfluid, das als Kühlflüssigkeit gedient hat, wird auf der Saugseite der Pumpe in das übrige Förderfluid hinein gemischt.

Es ist eine Kühlung des Elektromotors vorgesehen, wobei ein Kühlmittelkanal im oder am Elektromotor vorgesehen ist. Der Kühlmittelkanal verzweigt sich bevorzugt an den Lagerschildern des Elektromotors und verläuft - in einer nicht zur Erfindung gehörenden Ausführung - als parallele axiale Kanäle durch das Statorgehäuse oder direkt an dieses angepasst. Hierbei ist jeweils abzuwägen, welchen Einfluss ein Kühlmittelkanal auf die elektromagnetischen Eigenschaften des Elektromotors oder der Leistungselektronik hat und welchen Nutzen die gezielte Entwärmung bestimmter Stellen bringt.

In den beiden Lagerschildern, welche sich auch aus mehreren Teilen zusammensetzen können, kann eine Verschaltung der Kühlmittelkanäle vorgenommen werden. Der Verlauf des Kühlmediums durch einzelne Bereiche des Antriebes lässt sich im Rahmen der Konstruktion des Antriebes festlegen.

So lassen sich erfindungsgemäß an vom Kühlmittelkanal entfernten Komponenten der Leistungselektronik und/oder des Elektromotors Heatpipes vorsehen, die zur Entwärmung mit dem Kühlmittelkanal verbunden sind. Damit lassen sich spezielle Hotspots, also Stellen mit erhöhtem Wärmeeintrag, die eventuell für einen Kühlmittelkanal nicht einfach zu erreichen sind, entwärmen, wobei der kalte Teil der Heatpipe in das Kühlmittel entwärmt werden kann.

Weiterhin ist in der Zuleitung ein Stellglied zur Festlegung der Durchflussmenge vorgesehen, insbesondere ein Thermostatventil. Dies hat den Vorteil, dass nur so viel Kühlmittel vom Förderfluid abgezweigt wird, wie aufgrund der Erwärmung des Elektromotors oder der Leistungselektronik benötigt wird.

In einer weiteren Ausgestaltung sind die saugseitigen und druckseitigen Anschlüsse mittels Adapter an bestehenden Pumpengehäusen nachrüstbar. Dies hat den Vorteil, dass eine erfindungsgemäße Kühlung nachrüstbar ist, insbesondere bei Pumpen können Adapter an den Stutzen der Saug- und Druckseite angebracht werden, die über die Anschlüsse zum Abzweigen des Kühlmittels verfügen.

Weitere Merkmale und Vorteile der Erfindung ergeben sich aus der Beschreibung von Ausführungsbeispielen anhand von Zeichnungen und aus den Zeichnungen selbst.

Dabei zeigt:
Die Figur 1 den grundsätzlichen Aufbau einer erfindungsgemäßen Pumpe im Längsschnitt,
die Figur 2 eine erste Ausgestaltung einer erfindungsgemäßen Pumpe im Längsschnitt,
die Figur 3 einen zugehörigen Querschnitt,
die Figur 4 eine nicht zur Erfindung gehörende Pumpe im Längsschnitt,
die Figur 5 einen zweiten, nicht zur Erfindung gehörenden, zugehörigen Querschnitt,
die Figur 6 einen dritten, nicht zur Erfindung gehörenden, zugehörigen Querschnitt,
die Figur 7 einen vierten, nicht zur Erfindung gehörenden, zugehörigen Querschnitt,
die Figur 8 einen fünften, nicht zur Erfindung gehörenden, zugehörigen Querschnitt.

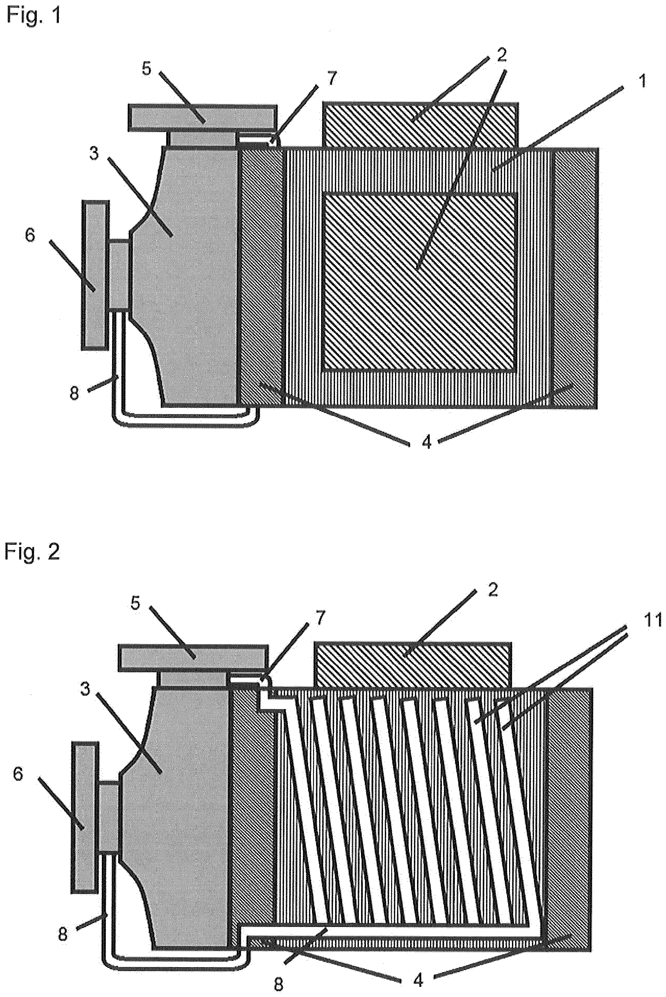

Figur 1 zeigt eine elektrisch angetriebene Pumpe, die mit einem Elektromotor 1, einer Leistungselektronik 2 ausgestattet ist. Bei der Pumpe kann es sich beispielsweise um eine Kreiselpumpe handeln, wobei andere Pumpentypen ebenfalls möglich sind. Die dargestellte Pumpe verfügt über ein Pumpengehäuse 3, das an einem der Lagerschilde 4 des Elektromotors angeflanscht ist. Außerdem werden erfindungsgemäß Anschlüsse für Fluidleitungen an dem Pumpengehäuse 3 vorgesehen, jeweils ein Anschluss für die Druckseite 5 und die Saugseite 6. An diesen Anschlüssen sind die Zuleitung 7 und die Rückleitung 8 des Kühlsystems vorgesehen. So wird auf der Druckseite 5 kaltes Förderfluid in den Kühlmittelkanal eingeprägt, auf der Saugseite 6 wird das Förderfluid dann wieder in den Strom des Förderfluids eingespeist. Die Zuleitung 7 und die Rückleitung 8 des Kühlsystems können sich sowohl innerhalb als auch außerhalb des Pumpengehäuses befinden.

Figur 2 zeigt eine axiale Darstellung einer erfindungsgemäßen Pumpe mit spiralförmigen Kühlmittelkanälen 11, die direkt mit der Zuleitung 7 und der Rückleitung 8 verbunden sind. Der Kühlmittelkanal 11 ist um den Elektromotor geführt, wobei der Kühlmittelkanal 11 außen am Gehäuse des Elektromotors 1 und/oder zwischen dem Elektromotor 1 und der Leistungselektronik 2 angeordnet ist.

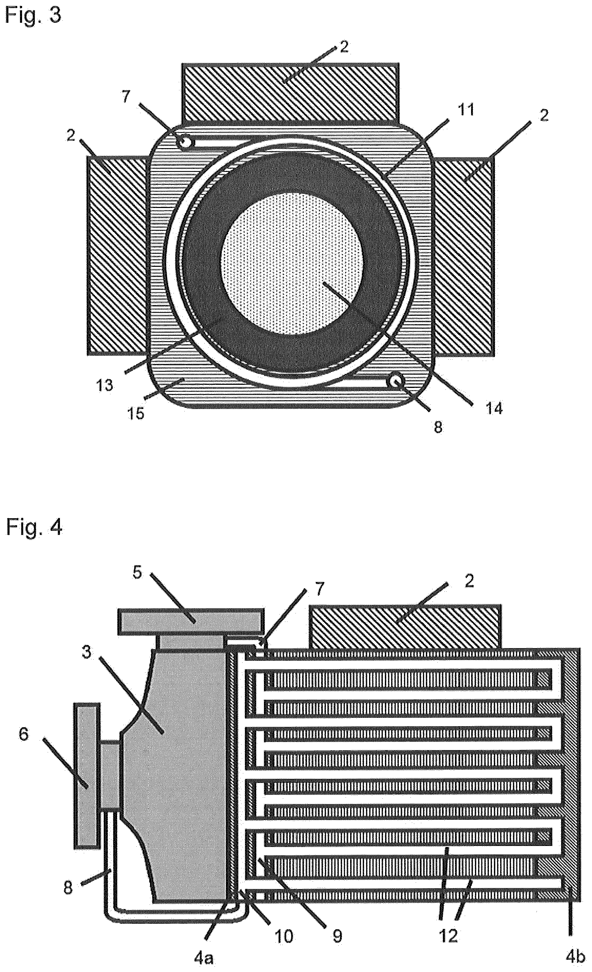

Figur 3 zeigt einen Schnitt durch den Elektromotor 1 und die Leistungselektronik 2, wobei die Anordnung der spiralförmigen Kühlmittelkanäle 11 im Motorgehäuse 15 um den Stator 13 besonders hervorzuheben ist. Der Rotor 14 des Elektromotors ist ebenfalls schematisch dargestellt. Der spiralförmige Kühlmittelkanal 11 verfügt über die beiden Anschlüsse Zuleitung 7 und Rückleitung 8.

Figur 4 zeigt - nicht zur Erfindung gehörend - eine axiale Darstellung der Pumpe mit axialen Kühlmittelkanälen 12. Im pumpenseitigen A-Lagerschild 4a wird das noch kühle Förderfluid über einen zentralen Kaltwassersammelring 9, der an der Druckseite 5 vorgesehen ist, auf die einzelnen Bereiche der Kühlmittelkanäle 12 verteilt. Im gegenüberliegenden B-Lagerschild 4b des Elektromotors wird der Kühlmittelfluss umgelenkt und über die Kühlmittelleitungen 12 wieder zurück ins A-Lagerschild 4a geleitet, wo er mittels eines Warmwassersammelrings 10, der Rückleitung 8 zugeführt wird. Von hier aus wird das Kühlmittel über die Saugseite 6 dem Fördermedium wieder zugeführt, wobei abhängig von der Fördermenge eine gute Durchmischung bereits schnell und einfach erreichbar ist.

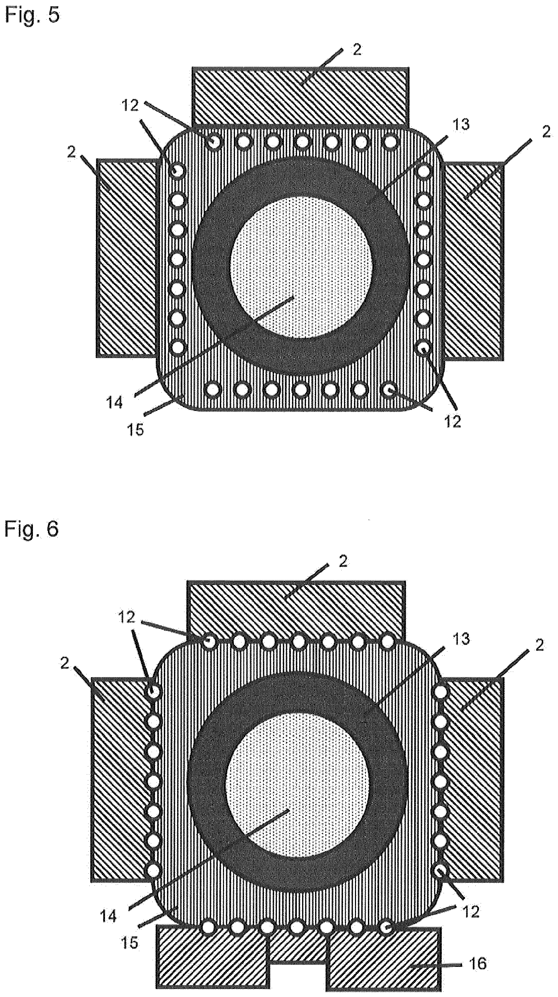

Figur 5 zeigt einen Schnitt durch den - nicht zur Erfindung gehörenden - Elektromotor und die Leistungselektronik 2 mit axialen Kühlmittelkanälen 12 im Motorgehäuse 15. Je nach Bedarf und Fertigbarkeit können die Kühlmittelkanäle 12 näher am Stator 13 angeordnet sein oder weiter weg. Die Verteilung des Kühlmediums kann hier und in den folgenden Beispielen, wie oben gezeigt über spezielle Ausgestaltungen der Leitungsführung in den Lagerschilden erfolgen. Insbesondere können die gezeigten Kalt- und Warmwassersammelringe zum Einsatz kommen. Entsprechende Lagerschilde sind bei Bedarf mittels 3d Druckverfahren herstellbar oder können alternativ mit außerhalb des Gehäuses liegenden Rohrleitungen ausgestattet sein.

Figur 6 zeigt einen Schnitt durch den - nicht zur Erfindung gehörenden - Elektromotor und die Leistungselektronik 2 mit axialen Kühlmittelkanälen 12 zum Teil im Motorgehäuse 15 und/oder zum Teil in den Motorfüssen 16 und/oder zum Teil im Elektronikgehäuse 2. Die Herstellung derartiger Kühlmittelkanäle ist einfach und kostengünstig herstellbar, außerdem sind die zu kühlenden Bereiche sehr gut thermisch angebunden.

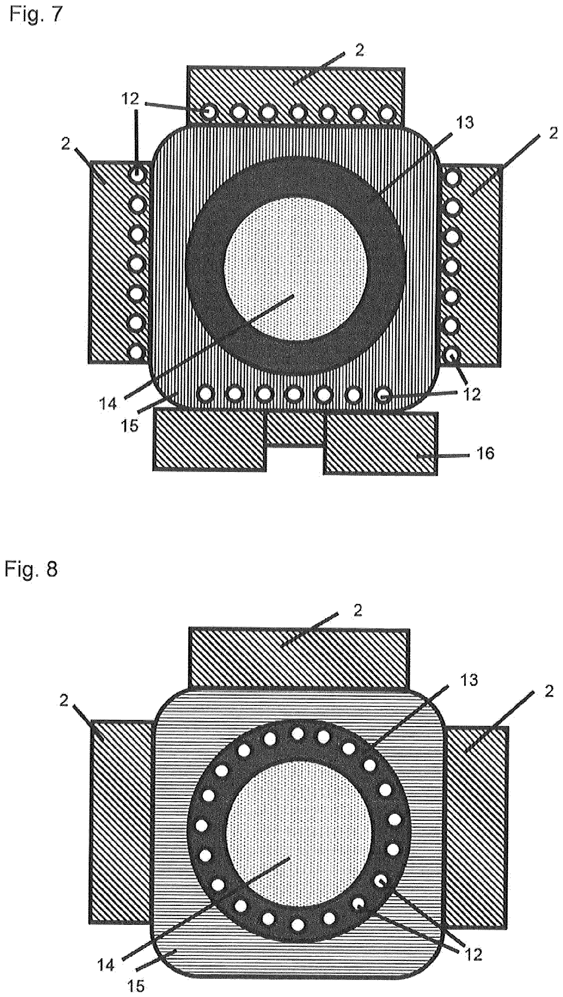

Figur 7 zeigt einen Schnitt durch den - nicht zur Erfindung gehörenden - Elektromotor und die Leistungselektronik 2 mit axialen Kühlmittelkanälen 12 zum Teil im Motorgehäuse 15 und/oder zum Teil im Elektronikgehäuse 2. Auch hier kann die Kühlung dort vorgenommen werden, wo sie speziell notwendig erscheint. So ist beispielsweise ein Steuerungselektronikmodul nicht besonders zu kühlen, während ein Leistungselektronikmodul besondere Kühlung benötigen kann.

Figur 8 zeigt einen Schnitt durch den Elektromotor und die Leistungselektronik 2 mit axialen Kühlmittelkanälen 12 - nicht zur Erfindung gehörend - im Stator 13 des Motors.

### Bezugszeichen

1 Elektromotor
2 Leistungselektronik
3 Pumpengehäuse
4 Lagerschild
5 Druckseite
6 Saugseite
7 Zuleitung
8 Rückleitung
9 Kaltwassersammelring
10 Warmwassersammelring
11 spiralförmiger Kühlmittelkanal
12 axialer Kühlmittelkanal
13 Stator
14 Rotor
15 Motorgehäuse
16 Motorfüsse

## Patentansprüche

1. Elektromotor (1) mit einer verbundenen Leistungselektronik (2) und einer Pumpe (3), umfassend einen Pumpenraum (3) mit einem saugseitigen (6) und einem druckseitigen (5) Anschluss,
sowie eine Kühlvorrichtung der Leistungselektronik (2) und des Motors, die mit dem Pumpenraum (3) verbunden ist,
wobei die Kühlvorrichtung als Flüssigkeitskühlung ausgeführt ist und die Kühlflüssigkeit durch das durch die Pumpe (3) geförderte Förderfluid bereitgestellt ist,
wobei ein Kühlmittelkanal (11) vorgesehen ist, der um den Elektromotor (1) geführt ist, wobei der Kühlmittelkanal (11) aussen am Gehäuse des Elektromotors (1) und zwischen dem Elektromotor (1) und der Leistungselektronik (2) angeordnet ist,
wobei die Kühlflüssigkeit von dem druckseitigen Anschluss (5) des Pumpengehäuses (3) durch den Kühlmittelkanal (11) zu dem saugseitigen Anschluss (6) des Pumpengehäuses (3) verläuft,
wobei die Anschlüsse für Fluidleitungen an dem Pumpengehäuse vorgesehen sind und der Kühlmittelkanal (11) über die beiden Anschlüsse Zuleitung (7) und Rückleitung (8) verfügt,
wobei die Zuleitung (7) mit dem druckseitigen Anschluss (5) verbunden ist und wobei die Rückleitung (8) mit dem saugseitigen Anschluss (6) verbunden ist,
**dadurch gekennzeichnet ,**
**dass** der Kühlkanal (11) spiralförmig ausgebildet ist,
wobei an vom Kühlmittelkanal (11) entfernten Komponenten der Leistungselektronik (2) und/oder des Elektromotors (1) Heatpipes vorgesehen sind, die zur Entwärmung mit dem Kühlmittelkanal (11) verbunden sind,
wobei in der Zuleitung (7) und/oder dem Kühlmittelkanal (11) ein Stellglied zur Festlegung der Durchflussmenge vorgesehen ist.

2. Elektromotor (1) nach Anspruch 1, **dadurch gekennzeichnet, dass** das Stellglied zur Festlegung der Durchflussmenge ein Thermostatventil ist.

3. Elektromotor (1) nach einem der vorhergehenden Ansprüche, **dadurch gekennzeichnet, dass** die saugseitigen (5) und druckseitigen (6) Anschlüsse mittels Adapter an bestehenden Pumpengehäusen nachrüstbar sind.

## Claims

1. Electric motor (1) having connected power electronics (2) and a pump (3), comprising a pump chamber (3) having a suction-side (6) and a pressure-side (5) connection,
and a cooling device of the power electronics (2) and the motor, which cooling device is connected to the pump chamber (3),
wherein the cooling device is realized as liquid cooling and the cooling liquid is provided by the delivery fluid delivered by the pump (3),
wherein a coolant channel (11) is provided, which is routed around the electric motor (1), wherein the coolant channel (11) is arranged externally on the casing of the electric motor (1) and between the electric motor (1) and the power electronics (2),
wherein the cooling liquid runs from the pressure-side connection (5) of the pump casing (3) through the coolant channel (11) to the suction-side connection (6) of the pump casing (3),
wherein the connections for fluid lines are provided on the pump casing and the coolant channel (11) has the two connections: supply line (7) and return line (8),
wherein the supply line (7) is connected to the pressure-side connection (5) and wherein the return line (8) is connected to the suction-side connection (6),
**characterized**
**in that** the cooling channel (11) is spiral-shaped,
wherein heat pipes are provided on components of the power electronics (2) and/or the electric motor (1) which are remote from the coolant channel (11), which heat pipes are connected to the coolant channel (11) for cooling purposes,
wherein a control element for establishing the flow rate is provided in the supply line (7) and/or the coolant channel (11).

2. Electric motor (1) according to Claim 1, **characterized in that** the control element for establishing the flow rate is a thermostat valve.

3. Electric motor (1) according to either of the preceding claims, **characterized in that** the suction-side (5) and pressure-side (6) connections can be retrofitted on existing pump casings by means of adapters.

## Revendications

1. Moteur électrique (1) doté d'une électronique de puissance (2) connectée et d'une pompe (3), comprenant une chambre de pompe (3) avec un raccord côté aspiration (6) et un raccord côté refoulement (5),
ainsi qu'un dispositif de refroidissement de l'électronique de puissance (2) et du moteur, qui est relié à la chambre de pompe (3),
le dispositif de refroidissement étant réalisé sous la forme d'un refroidissement par liquide et le liquide de refroidissement étant fourni par le fluide de transport refoulé par la pompe (3),
un canal à agent refroidisseur (11) étant présent, lequel est passé autour du moteur électrique (1), le canal à fluide de refroidissement (11) étant disposé à l'extérieur sur le carter du moteur électrique (1) et entre le moteur électrique (1) et l'électronique de puissance (2),
le liquide de refroidissement s'écoulant depuis le raccord côté refoulement (5) du corps de pompe (3) à travers le canal à agent refroidisseur (11) jusqu'au raccord côté aspiration (6) du corps de pompe (3),
les raccords pour les conduites de fluide étant prévus sur le corps de pompe et le canal à agent refroidisseur (11) disposant des deux raccords de conduite d'arrivée (7) et de conduite de retour (8),
la conduite d'arrivée (7) étant reliée au raccord côté refoulement (5) et la conduite de retour (8) étant reliée au raccord côté aspiration (6),
**caractérisé**
**en ce que** le canal de refroidissement (11) est configuré en forme de spirale,
des caloducs étant prévus sur des composants de l'électronique de puissance (2) et/ou du moteur électrique (1) éloignés du canal à agent refroidisseur (11), lesquels sont reliés au canal agent refroidisseur (11) pour la dissipation de la chaleur,
un organe de réglage servant à établir le débit étant prévu dans la conduite d'arrivée (7) et/ou dans le canal à agent refroidisseur (11).

2. Moteur électrique (1) selon la revendication 1, **caractérisé en ce que** l'organe de réglage servant à établir le débit est une vanne thermostatique.

3. Moteur électrique (1) selon l'une des revendications précédentes, **caractérisé en ce que** les raccords côté aspiration (5) et côté refoulement (6) peuvent être ajoutés ultérieurement à des corps de pompe existants au moyen d'adaptateurs.
